# FASCICULE DE BREVET EUROPEEN

(11) **EP 1 205 936 B1**
(45) Date de publication et mention de la délivrance du brevet: **03.01.2007**
(21) Numéro de dépôt: 01402913.6
(22) Date de dépôt: 13.11.2001
(51) Int. Cl.: G11B 33/04

(54) **Emballage de stockage de disques numériques**
Verpackung zum Lagern von digitale Platten
Storage package for digital discs

(30) Priorité: 13.11.2000 FR 0014547
(43) Date de publication de la demande: 15.05.2002
(73) Titulaire: Moulage Industriel de Perseigne - MIP, 72600 La Freysnaye sur Chedouet (FR)
(72) Inventeur: Crouan, Alain, 72000 Le Mans (FR)
(74) Mandataire: Breese, Pierre

(56) Documents cités:
- EP-A- 0 022 652
- DE-U- 29 700 990
- GB-A- 2 274 450
- GB-A- 2 274 452
- GB-A- 2 307 899
- US-A- 4 823 950
- US-A- 5 477 960
- US-A- 5 799 782
- US-A- 5 845 771

## Description

La présente invention se rapporte à un emballage de stockage de disques numériques et, en particulier, à un emballage de stockage de disques numériques de mémorisation de données audio ou vidéo.

Plus particulièrement, l'invention concerne un emballage de stockage de disques numériques, du type comprenant au moins un support en forme de plaque qui est doté de deux faces mutuellement opposées dont l'une au moins est pourvue d'une rosace à contour circulaire sur laquelle vient s'accrocher un disque, et une couverture de protection comprenant au moins une paire de volets rabattables réunis-par un dos et sur laquelle est monté le support.

Dans un mode de réalisation d'un emballage de stockage de ce type, le ou chaque support est collé contre l'un des volets de la couverture, de sorte que seule l'une des faces du support est disponible pour recevoir un disque.

Ainsi, chaque support n'est adapté que pour recevoir un seul disque et l'accès aux deux faces du support n'est pas possible.

Ce type d'emballage de stockage présente dès lors une épaisseur globale, à l'état fermé, relativement importante.

Un emballage selon le préambule de la revendication 1 est décrit notamment dans le GB2274450A ou le US 5 799782A.

Le but de l'invention est de pallier cet inconvénient.

Elle a donc pour objet un emballage de stockage du type précité, comprenant les caractéristiques techniques de la revendication 1.

Par conséquent, les deux faces du support peuvent chacune être utilisées pour le stockage d'un disque, ce qui permet de diminuer en conséquence l'épaisseur globale de l'emballage.

Cet emballage de stockage peut également comporter une ou plusieurs des caractéristiques suivantes, prises isolément ou selon toutes les combinaisons techniquement possibles :
- le support est monté sur le dos au moyen d'une charnière ;
- la charnière comporte une lame fixée sur la face interne du dos et dont les zones d'extrémité sont dotées chacune d'un épaulement dressé qui est pourvu d'un orifice dans lequel s'engage un ergot porté par le support ;
- chaque épaulement est doté d'une gorge de guidage dotée de deux bords mutuellement opposés en forme de rampe convergeant vers l'orifice ;
- le bord périphérique libre du support est pourvu d'une bordure dont l'épaisseur est sensiblement égale à celle du dos ;
- chacune des faces du support est pourvue d'une rosace pour l'accrochage de deux disques sur le ou chaque support ;
- la couverture comporte deux paires de volets réunis par un dos sur lequel est monté un support respectif, l'un des volets de l'une des paires étant articulé sur un volet de l'autre paire ; et
- la couverture est réalisée en carton.

D'autres buts, caractéristiques et avantages de l'invention ressortiront de la description suivante, donnée uniquement à titre d'exemple, et faite en référence aux dessins annexés sur lesquels :
- la figure 1 est une vue en perspective d'un emballage de stockage de disque conforme à l'invention ;
- la figure 2 est une vue de détail, à plus grande échelle, d'un élément de l'une des charnières de l'emballage de la figure 1 ; et
- la figure 3 montre la constitution de l'un des épaulements de l'élément de charnière de la figure 2.

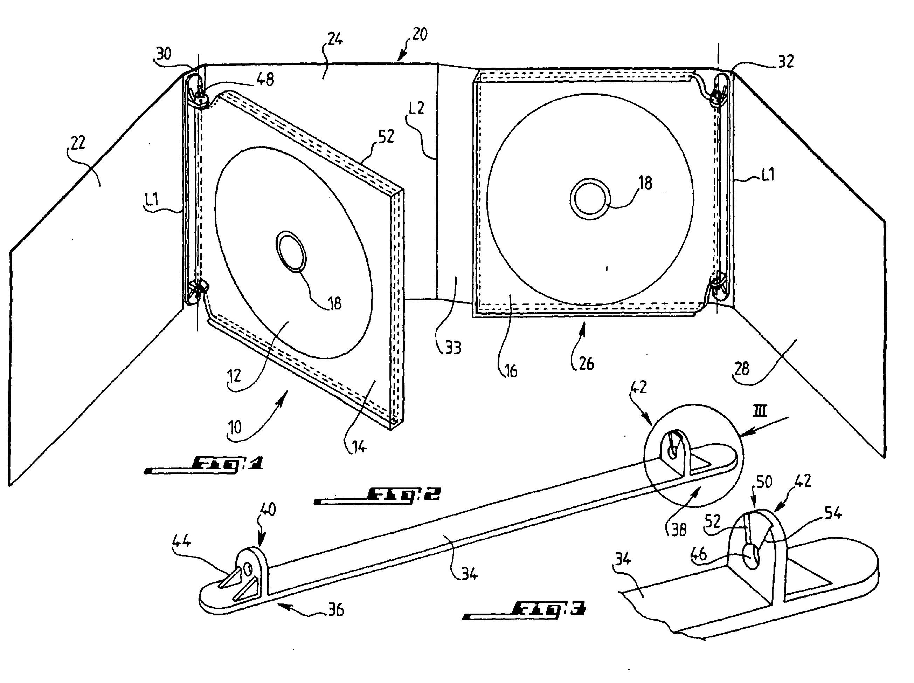

Sur la figure 1, on a représenté un emballage de stockage de disques numériques conforme à l'invention. Cet emballage, désigné par la référence numérique générale 10, est représenté en position supposée verticale.

Dans l'exemple de réalisation représenté, il est destiné au stockage de quatre disques numériques, de type audio-disque ou vidéo-disque, tels que 12.

A cet effet, il est pourvu de deux supports 14 et 16 en forme de plaque dont chacune des grandes faces est pourvue d'une rosace centrale 18 à contour circulaire servant à l'accrochage d'un disque.

Chaque support 14 et 16 est fixé sur une couverture 20 réalisée en carton ou en tout autre matériau approprié.

Plus particulièrement, la couverture 20 est pourvue de deux paires de volets rabattables, respectivement 22, 24 et 26, 28 réunis par un dos, respectivement 30 et 32, sur lequel s'articule un support 14 et 16 correspondant.

Les paires de volets sont réunies au moyen d'un pan 33 de largeur sensiblement égale au double de l'épaisseur maximale de chaque support, de sorte que l'un des volets de l'une des paires s'articule sur un volet de l'autre paire de volets.

Chaque volet est lié au dos qui lui correspond par l'intermédiaire d'une ligne de pliage L1.

De même, les paires de volets sont liées au pan central 33 par l'intermédiaire de lignes de pliage L2.

Dès lors, l'emballage peut adopter une configuration déployée, visible sur la figure 1, rendant les supports accessibles, et une configuration repliée de stockage (non représentée) dans laquelle les volets sont rabattus contre les supports et les paires de volets sont rabattues l'une contre l'autre, par pliage autour des lignes de pliage L1 et L2.

De préférence, la couverture est réalisée à partir d'une unique plaque de carton.

Comme on le voit sur la figure 1, chaque support 14 et 16 est fixé sur la face interne de l'un des dos au moyen d'une charnière, de sorte qu'il soit monté de manière oscillante par rapport à la couverture.

En référence à la figure 2, chaque charnière comporte essentiellement un élément de charnière 34 en forme de lame fixée sur la face interne du dos 30, 32 qui lui correspond au moyen d'une colle appropriée pour l'utilisation envisagée.

La longueur de cet élément de charnière correspond sensiblement à la hauteur de l'emballage de stockage de manière qu'il s'étende sensiblement sur toute la longueur de la face interne du dos 30, 32.

Les deux zones d'extrémité mutuellement opposées 36 et 38 de chaque lame 34 sont chacune pourvues d'un épaulement 40, 42 dressé et rigidifié au moyen de nervures, telles que 44.

En se référant à la figure 3, on voit que chaque épaulement 42 est pourvu d'un orifice 46 dans lequel s'engage un ergot 48 porté par le support 14, 16.

Par ailleurs, chaque épaulement 42 est pourvu d'une gorge 50 dont les bords 52 et 54 mutuellement opposés délimitent des rampes de guidage convergeant vers l'orifice 46 facilitant le centrage et l'insertion des ergots 48 dans les orifices 46.

Par ailleurs, les côtés de chaque support 14 et 16 à l'exception du côté par lequel il s'articule sur la couverture 20 sont pourvus d'un rebord, tel que 52 d'épaisseur correspondant sensiblement à l'épaisseur du dos 30 et 32 et sur lesquels reposent les volets, en position rabattue.

Ainsi, en position de stockage, c'est à dire lorsque les volets sont rabattus contre les supports et que les paires de volets sont rabattues l'une contre l'autre autour du pan central 33, les volets reposent contre les rebords latéraux 52, empêchant ainsi toute pénétration de poussière dans l'emballage.

Comme on le conçoit, l'invention qui vient d'être décrite, qui utilise des supports de disque articulés sur une couverture de protection permet de diminuer considérablement l'épaisseur globale de l'emballage.

On notera cependant que l'invention n'est pas limitée au mode de réalisation décrit.

En effet, il est possible de doter l'emballage d'un nombre quelconque de paires de volets réunis par un dos sur lequel s'articule un support correspondant.

Il est également possible de juxtaposer, sur chaque dos, plusieurs articulations, pour le montage d'un nombre correspondant de supports.

## Revendications

1. Emballage de stockage de disques numériques, comprenant au moins un support (14, 16) en forme de plaque qui est doté de deux faces mutellement opposées dont l'une au moins est pourvue d'une rosace (18) à contour circulaire sur laquelle vient s'accrocher un disque (12), et une couverture (20) de protection comprenant au moins une paire de volets (22, 24, 26, 28) rabattables réunis par un dos (30, 32) et sur laquelle est monté le support, ladite couverture (20) étant en carton, **caractérisé en ce que** le support est monté de manière pivotante sur la face interne du dos de la couverture au moyen d'une charnière (34, 48) comportant une lame (34) fixée sur la face interne du dos et dont les zones d'extrémité sont dotées chacune d'un épaulement (40, 42) dressé qui est pourvu d'un orifice (46) dans lequel s'engage un ergot (48) porté par le support et qui est doté d'une gorge de guidage (50) avec deux bords mutuellement opposés en forme de rampe convergeant vers l'orifice.

2. Emballage de stockage selon la revendication 1, **caractérisé en ce que** le bord périphérique libre du support est pourvu d'une bordure (52) dont l'épaisseur est sensiblement égale à celle du dos.

3. Emballage de stockage selon l'une quelconque des revendications 1 ou 2 **caractérisé en ce que** chacune des faces du support est pourvue d'une rosace (18) pour l'accrochage de deux disques sur le support.

4. Emballage de stockage selon l'une quelconque des revendications 1 à 3 **caractérisé en ce que** la couverture comporte deux paires de volets (22, 24, 26, 28) réunis par un dos sur lequel est monté un support (14, 16) respectif l'un des volets de l'une des paires étant articulé sur un volet de l'autre paire.

## Claims

1. Storage case for digital disks, comprising at least one support (14, 16) in the shape of a plate, which has two mutually opposing faces, at least one of which includes a rosette (18) with a circular contour to which a disk (12) can attach, and a protective cover (20) comprising at least one pair of folding flaps (22, 24, 26, 28) which are joined by a spine (30, 32) and on which the support is mounted, said cover 20 being made from cardboard, **characterised in that** the support is mounted such as to pivot on the inside face of the spine of the cover by means of a hinge (34, 48) including one blade (34) fixed to the internal face of the spine, the end areas of which are each equipped with a raised shoulder (40, 42) which is provided with an orifice (46) in which a pin (48) carried by the support is inserted and which is provided with a guiding groove (50) with mutually opposing ramp-shaped edges that converge towards the orifice.

2. Storage case according to claim 1, **characterised in that** the free peripheral edge of the support has a border (52) that is of substantially the same thickness as the spine.

3. Storage case according to either one of the claims 1 or 2, **characterised in that** both the faces of the support are provided with a rosette (18) so that two disks can be attached to the support.

4. Storage case according to any one of the claims from 1 to 3, **characterised in that** the cover comprises two pairs of flaps (22, 24, 26, 28) joined by a spine on each of which is respectively mounted a support (14, 16), one of the flaps of one of the pairs being hinged to a flap of the other pair.

## Patentansprüche

1. Verpackung zur Aufbewahrung von CDs, die mindestens einen Träger (14, 16) in Form einer Platte umfasst, welche mit zwei einander gegenüber stehenden Flächen versehen ist, von denen mindestens eine eine Rosette (18) mit rundem Umfang aufweist, in die eine CD (12) eingelegt werden kann, und eine Schutzbedeckung (20), die mindestens ein einklappbares Klappenpaar (22, 24, 26, 28) umfasst, das durch ein Rückteil (30, 32) zusammengehalten wird, und auf die der Träger montiert ist, wobei besagte Bedeckung (20) aus Pappe besteht, **dadurch gekennzeichnet, dass** der Träger auf der Innenfläche der Rückteils mittels eines Gelenks (34, 48) drehbar auf die Bedeckung montiert ist, wobei das Gelenk eine Zunge (34) umfasst, die auf der Innenseite des Rückteils befestigt ist und deren Endbereiche jeweils mit einem aufrechten Ansatz (40, 42) mit einer Öffnung (46) versehen sind, in die ein vom Träger getragener Stift (48) eingeführt wird, welcher mit einer Führungsnut (50) mit zwei einander gegenüberstehenden Rändern in Form einer zur Öffnung hin verlaufenden Steigung versehen ist.

2. Aufbewahrungsverpackung nach Patentanspruch 1, **dadurch gekennzeichnet, dass** der freie Rand am Umfang des Trägers eine Randzone (52) aufweist, deren Dicke deutlich gleich der Dicke des Rückteils ist.

3. Aufbewahrungsverpackung nach Patentanspruch 1 oder 2, **dadurch gekennzeichnet, dass** jede Fläche des Trägers mit einer Rosette (18) zum Einlegen zweier CD's in den Träger versehen ist.

4. Aufbewahrungsverpackung nach einem der Patentansprüche 1 bis 3, **dadurch gekennzeichnet, dass** die Bedeckung zwei Klappenpaare umfasst (22, 24, 26, 28), die von einem Rückteil gehalten werden, an dem jeweils ein Träger (14, 16) montiert ist, wobei eine der Kappen eines der Klappenpaare auf einer Klappe des anderen Paares beweglich befestigt ist.
